# EUROPEAN PATENT APPLICATION

(11) **EP 4 756 723 A1**
(43) Date of publication of application: **10.06.2026**
(21) Application number: 25220196.7
(22) Date of filing: 02.12.2025
(51) Int. Cl.: G06T 15/04, G06T 15/10, G06T 19/20

(54) **DYNAMIC COLOR VISUALIZATION IN A THREE-DIMENSIONAL MODEL OF A DENTAL OBJECT**

(30) Priority: 05.12.2024 DK PA202470296
(71) Applicant: 3Shape A/S, 1060 Copenhagen K (DK)
(72) Inventor: CEBOV, Aleksandar, 1060 Copenhagen K (DK); MIHOV, Filip, 1060 Copenhagen K (DK); VANNAHME, Christoph, 1060 Copenhagen K (DK)
(74) Representative: Zacco Denmark A/S

(57) **Abstract**

The present disclosure relates to an intraoral scanning system that is configured to generate a three-dimensional (3D) model with dynamic texture that changes according to a viewing direction of a virtual camera. The system comprises an intraoral scanner, which acquires geometric image data and a plurality of texture image data of a dental object at a plurality of viewing directions. The system further comprises one or more processing units configured to generate a 3D mesh model of the dental object based on the geometric image data, and to assign two or more texture values to a mesh vertex, corresponding to its projections in the texture image data of several viewing directions. The 3D mesh model is rendered with a virtual camera and textured according to texture values corresponding to the viewing direction of the virtual camera.

## Description

### FIELD

The disclosure relates to a method and an intraoral scanning system that is configured to generate a three-dimensional (3D) model with dynamic texture that changes according to a viewing direction of a virtual camera. More specifically, the disclosure relates to assigning two or more texture values with different viewing directions to a vertex of the 3D model.

### BACKGROUND

Currently, intraoral scanners capture multiple images while scanning, and those images are used for generating a 3D representation of an object. Furthermore, those images are compiled into colors that are applied on to the 3D representation. The user can rotate, zoom in/out, pan the 3D representation, but the colors on the 3D representation will always be the same. Since, a single color is used to represent each point of the 3D representation, then all colors of the captured images that covers the same points of the 3D representation need to be averaged. These average colors often cannot be trusted and used in comparison and measurements as they have been taken from different positions under different lighting conditions and other environment variables that can affect the true color. Furthermore, some image modalities, like infrared (IR), depend a lot on scanner view direction, so images that cover the same points can have completely different values depending on the view direction.

IR images are suitable for detecting inter-proximal caries, but the issue is that a point in the 3D representation can't be represented by a single IR texture value, as this value depends on view direction of the scanner when it took the IR image (IR image taken from one position can expose caries lesion, but from another position same lesion cannot be detected). Therefore, a new visualization is needed where colors need to be dynamically changed in relation to a virtual camera viewing direction

### SUMMARY

It is an aspect of the present disclosure to overcome the above-mentioned problem on how to provide colors in a 3D representation that dynamically change in relation to a virtual camera viewing direction. By changing an orientation of the 3D representation, i.e. a 3D model of a dental object, in a graphical user interface would result in changing colors on the 3D model in corresponding to a viewing direction of a virtual camera. Thereby, a more realistic and accurate coloring of the 3D model is provided.

According to an aspect, an intraoral scanning system is disclosed. The intraoral scanning system may be configured to assign a texture value to a three-dimensional (3D) model of a dental object, and wherein the intraoral scanning system comprising an intraoral scanner configured to acquire geometric image data of a dental object and a plurality of texture image data of the dental object at different viewing directions relative to a position on the dental object.

The texture value may include color, contrast, brightness, and/or transparency values.

The geometric image data includes image data with light pattern that is used to determine depth information of the geometric image data. The depth information and the remaining data in the geometric image data are used to generate a 3D model. The texture image data includes one or more of following:
- Red-Green-Blue (RGB) color parameter of a dental object,
- Infrared parameter of a dental object,
- Roughness scalar parameter of a dental object,
- Absorption parameter of a dental object, and
- Scattering parameter of a dental object.

The texture image data may be used to determine following optical parameters that are applied to the 3D model:
- diffusely scattering parameter of the dental object,
- glossy reflection parameter of the dental object,
- translucent parameter of the dental object, and
- internal dental feature parameter of the dental object.

The intraoral scanning system may include one or more processing units configured to generate a 3D model of the dental object based on the geometric image data, wherein the 3D model includes a 3D mesh with a plurality of vertices. The 3D mesh may be provided by a segmentation of the 3D model wherein the 3D mesh includes the plurality of vertices that represents a dental object that includes at least a plurality of teeth. In another example, the plurality of vertices may also represent a dental object that includes a plurality of teeth and a gingival. The one or more processing units may be configured to project a plurality of texture rays from at least one pixel and in a viewing direction for each of the plurality of texture image data, and wherein the at least one pixel corresponds to a texture value. The texture value may be a pixel value that could include following parameters:
- Red-Green-Blue (RGB) color parameter of a dental object,
- Infrared parameter of a dental object,
- Roughness scalar parameter of a dental object,
- Absorption parameter of a dental object, and
- Scattering parameter of a dental object.

The plurality of texture rays is virtually generated by the one or more processing units in a direction normal to each of the pixels of the texture image data and towards the 3D model. The one or more processing units is then configured to determine whether a vertex of the plurality of vertices of the 3D model fulfils an intersection criterium relative to each of the plurality of texture rays. The intersection criterium may be that a vertex of the plurality of vertices is intersected by a texture ray, and/or a vertex of the plurality of vertices which is closest to an intersection of the 3D mesh and a texture ray. For example, the texture ray may intersect the 3D mesh between a plurality of vertices of the 3D mesh but closest to a vertex of the plurality of vertices, and that vertex would then receive the texture value of that pixel which corresponds to the texture ray. In another example, the texture ray may even intersect the vertex.

Furthermore, the one or more processing units may be configured to assign to the vertex, if the vertex fulfils the intersection criterium in relation to two or more texture rays of the plurality of texture rays, two or more texture values and corresponding viewing directions of the two or more texture rays. Which means the vertex may include at least two texture values and corresponding viewing directions that are compared with a virtual camera viewing directions to determine which of the at least two texture values should be included in determine a color for the 3D model to be displayed.

The 3D model may then be rendered by applying for each of the vertex a texture value of the two or more texture values which corresponding viewing direction matches to a virtual camera viewing direction of a virtual camera.

The intraoral scanning system may be configured to dynamically adjust a plurality of colors of a 3D model based on the virtual camera viewing direction. The intraoral scanning system may comprise an intraoral scanner that is configured to acquire geometric image data of a dental object and a plurality of texture image data of the dental object at different viewing directions relative to a position on the dental object. The intraoral scanning system may include one or more processing units that is configured to generate a 3D model of the dental object based on the geometric image data, determine, based on the plurality of texture image data, a plurality of texture values from the different viewing directions, and determine, according to the virtual camera viewing direction, a plurality of colors for the 3D model based on the plurality of texture values, wherein viewing directions of the plurality of texture values fulfils a deviation angle criterium relative to the virtual camera viewing direction. The dynamically adjustment of the plurality of colors of the 3D model will provide a more accurate representation of the dental object.

The 3D model is rendered by using a virtual camera that emulates what a human eye would see if the 3D model were real in physical space. When a use rotates or move the position of the 3D model the virtual camera would also change its viewing direction or position. In this example, the virtual camera has a virtual camera viewing direction which changes based on inputs from a user of the system. The rendering of the 3D model at different virtual camera viewing directions would results in a change of the colors of the 3D model that have been determined by the texture values of the plurality of vertices. By dynamically changing colors in the 3D model based on the virtual camera viewing direction would provide the user a more realistic three-dimensional representation of the dental object.

The corresponding viewing directions of the two or more texture rays are different, meaning that when changing the position of the virtual camera viewing direction between the viewing direction of the two or more texture rays would result in a change of colors in the 3D model based on a relation between the viewing direction of the two or more texture rays and the virtual camera viewing direction. The relation may be an angle between the viewing direction of the two or more texture rays and the virtual camera viewing direction.

The geometric image data and the plurality of texture image data are acquired from a same position relative to the dental object which may be accomplished by a high-speed camera that is configured to acquire the geometric image data and the plurality of texture image data with a frame rate of between 2000 and 3500 images per second. A scan sequence which includes at least the geometric image data and the plurality of texture image data would cover the same area of the dental object due to the fast frame rate.

Each of the acquired plurality of texture image data may have a first timestamp and the geometric image data may have a second timestamp, and wherein the one or more processing units may be configured to correlate the plurality of texture image data relative to the geometric image data by comparing the first timestamp and the second timestamp. A time difference between the first timestamp and the second timestamp should be below a time difference threshold so to be sure that the plurality of texture image data and the plurality of geometric image data can be correlated to the same point on the dental object.

Each of the plurality of texture image data includes a group of edge pixels that at least partly surrounds a group of framed pixels of each of the plurality of texture image data, and the one or more processing units may be configured to, for each of the plurality of texture image data determine multiple edge texture rays in a viewing direction of the group of edge pixels, wherein the multiple edge texture rays are part of the plurality of texture rays. Then, the one or more processing units may be configured to determine whether a group of edge vertices of the plurality of vertices fulfil the intersection criterium relative to the multiple edge texture rays, wherein the group of edge vertices at least partly surrounds a group of framed vertices of the plurality of vertices, and determine a framed vertex ray in a viewing direction of each framed vertices of the group of framed vertices towards the group of framed pixels. Additionally, the one or more processing units may be configured to determine whether a framed vertex of the framed vertices fulfils a second intersection criterium between the framed vertex ray of the framed vertex and a framed pixel of the group of framed pixels, and assign to the framed vertex, if the vertex fulfils the second intersection criterium, a texture value of the framed pixel and the viewing direction of the framed vertex ray. The advantage of combining texture rays and framed vertex rays is that the assigning of texture values to the plurality of vertices in the 3D model would be done a lot faster in comparison to the example where only texture rays are used.

The one or more processing units may be configured to render the 3D model according to the virtual camera viewing direction of the virtual camera, wherein the 3D model includes a plurality of facets formed by the plurality of vertices. A facet of the plurality of facets may include at least three vertices of the plurality of vertices. The one or more processing units may be configured to select a texture value of the two or more texture values for each of the at least three vertices, wherein a corresponding viewing direction of the selected texture value for each of the at least three vertices fulfil a deviation angle criterium in relation to the virtual camera viewing direction, and determine a color for the facet based on the selected texture value for each of the at least three vertices. The deviation angle criterium may include one or more of following a viewing direction of a texture value is closest to a virtual camera viewing direction, and a viewing direction of a texture value is below a maximum viewing direction angle in relation to a virtual camera viewing direction. The maximum viewing direction angle may be above 90 degrees, between 100 and 180 degrees, or between 120 and 180 degrees.

The one or more processing units is configured to determine an orientation of the 3D model based on the virtual camera viewing direction, and wherein the virtual camera viewing direction is determined based on a user input. The user input may be a rotation of the 3D model that would results in a change in the virtual camera viewing direction.

It would not be feasible to cover all viewing directions of a dental object, such that any of the plurality of vertices would have a texture value with a corresponding viewing direction that fulfils the deviation angle criterium to any virtual camera viewing directions. Thereby, a weighting coefficient is assigned to each of the texture values of a vertex, and the weighting coefficient for each of the texture values changes according to an angle difference between the corresponding viewing directions of the texture values and the virtual camera viewing direction. For example, if a first angle difference between a first viewing direction and the virtual camera viewing direction is less than a second angle difference between a second viewing direction and the virtual camera viewing direction, then the weighting coefficient of the first texture value that corresponds to the first viewing direction would be greater than the weighting coefficient of the second texture value that corresponds to the second viewing direction. By applying a dynamically changing weighting coefficient to each of the texture values would result in that facets of the 3D model would be assigned with a color during a rendering of the 3D model according to any virtual camera viewing directions.

The one or more processing units may be configured to assign a weighting coefficient to each of the two or more texture values assigned to the vertex, and determine the weighting coefficient of each of the two or more texture values based on a difference between a virtual camera viewing direction of a virtual camera and the corresponding viewing direction of each of the two or more texture values.

The weighting coefficient may be above zero when the difference between the virtual camera viewing direction and the corresponding viewing direction of each of the two or more texture values is below or equal to a maximum deviation angle. The weighting coefficient may be zero when the difference between the virtual camera viewing direction and the corresponding viewing direction of each of the two or more texture values is above the maximum deviation angle. The maximum deviation angle may be above 90 degrees or above 180 degrees. When the difference between the virtual camera viewing direction and a viewing direction of a corresponding texture value is above the maximum deviation angle then the quality/correctness of the color determined based on the texture value becomes not suitable to be assigned to a facet of the 3D model. The color is not suitable to be applied to the 3D model because the color does not resemble the color of the dental object at that facet.

The one or more processor is configured to determine the color based on a weighted average of the selected texture values, and wherein each of the selected texture values has a weighting coefficient that is determined based on a difference between a virtual camera viewing direction of a virtual camera and the viewing direction of each of the selected texture values. For example, if the difference increases the weighting coefficient decreases of the corresponding texture value, meaning that, the corresponding texture value becomes less relevant for determining a color to a facet.

The difference between a virtual camera viewing direction and the viewing direction of a corresponding texture value is an angle difference or a different between Barycentric coordinates of the viewing directions.

The one or more processing units may be configured to determine the color based on an average of the selected texture values.

The difference between the virtual camera viewing direction and the viewing direction of a texture value is determined by based on one or more of following an angle between the virtual camera viewing direction and the viewing direction of a texture value, a cosine of an angle between the virtual camera viewing direction and the viewing direction of a texture value, and a different between Barycentric coordinates of the viewing directions.

As the virtual camera viewing direction becomes more distinct from the viewing directions of the texture values then the quality of the color that is determined based on the texture values becomes lower at the virtual camera viewing direction. Therefore, there is a need for providing feedback to the user of the system on the quality of the color applied to the 3D model. The one or more processing units may be configured to determine a quality score of the color determined for the facet, and wherein the quality score may be determined based on a difference between the virtual camera viewing direction and the viewing direction for each of the selected texture values, and wherein the quality score decreases when the difference increases.

A vertex of the plurality of vertices may include no texture values at the virtual camera viewing direction or which fulfil the deviation angle criterium, e.g. are below a maximum deviation angle. In this example, to determine a color of a corresponding facet to the vertex, the one or more processing units may be configured to interpolate a texture value to the vertex which fulfils the deviation angle criterium.

The one or more of the at least three vertices of the facet do not include a texture value with a corresponding viewing direction that fulfils the deviation angle criterium in relation to the virtual camera viewing direction. The one or more processing units may be configured to interpolate a texture value for the one or more of the at least three vertices based on one or more of the at least three vertices that does include a texture value with a corresponding viewing direction that fulfils the deviation angle criterium in relation to the virtual camera viewing direction.

By applying interpolation to determine texture values would have a negative effect on the quality of the color on the 3D model in comparison to if no interpolation is used to determine texture values. Therefore, there is a need to provide feedback to the user on the quality of the color applied to the 3D model. The one or more processing units may be configured to determine a quality score of the color determined for the facet, and wherein the quality score may be determined based on a number of the one or more of the at least three vertices of the facet that does not include a texture value with a corresponding viewing direction that fulfils the deviation angle criterium in relation to the virtual camera viewing direction, and wherein the quality score decreases when the number increases. The quality score decrease while the number increases corresponds to an example where more interpolations are needed in order to determine the color of a facet.

The one or more processing units may be configured to assign a feedback color to the facet if the quality score is below a quality threshold, and assign the color to the facet if the quality score is at or above the quality threshold. The quality threshold may be determined based on the number of interpolations being performed to determine a color, and/or based on the level of weighting coefficients applied to the texture values.

The one or more processing units may be configured to adjust a transparency value of the feedback color based on the quality score. The feedback color may be predefined and stored in a memory of the system.

The plurality of texture image data may include one or more of following wavelengths:
- visible wavelengths between 380 nm and 750 nm,
- ultraviolet wavelengths between 100 nm and 380 nm, and
- infrared wavelengths between 750 nm and 1350 nm.

The acquired geometric image data may include wavelengths in the visible wavelength range, and the plurality of texture image data may include visible wavelengths, fluorescent wavelengths, and/or infrared wavelengths.

The plurality of texture image data may include a composition of the wavelengths, wherein the composition of the wavelengths includes a mix of visible wavelengths, fluorescent wavelengths and/or infrared wavelengths.

The deviation angle criterium may include one or more of following a viewing direction of a texture value is closest to a virtual camera viewing direction, a viewing direction of a texture value is closest to a virtual camera viewing direction, and a viewing direction of a texture value is below a maximum viewing direction angle in relation to a virtual camera viewing direction.

The intersection criterium may include one or more of following a vertex of the plurality of vertices which is intersected by texture ray, and a vertex of the plurality of vertices which is closest to an intersection of the 3D mesh and a texture ray.

The second intersection criterium may include one or more of following a framed vertex ray intersects a framed pixel, and a framed vertex ray intersects closest to a framed pixel.

According to an aspect, a computer-implemented method for assigning a texture value to a three-dimensional (3D) model of a dental object is disclosed. The method comprising receiving geometric image data of a dental object and a plurality of texture image data of the dental object and corresponding viewing directions relative to the dental object, generating a 3D model of the dental object based on the geometric image data, wherein the 3D model includes a 3D mesh with a plurality of vertices, projecting a plurality of texture rays from at least one pixel and in a viewing direction for each of the plurality of texture image data, and wherein the at least one pixel corresponds to a texture value, determining whether a vertex of the plurality of vertices fulfils an intersection criterium relative to each of the plurality of texture rays, and assigning to the vertex, if the vertex fulfils the intersection criterium in relation to two or more texture rays of the plurality of texture rays, two or more texture values and corresponding viewing directions of the two or more texture rays.

### BRIEF DESCRIPTION OF THE FIGURES

Aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
FIG. 1 illustrates an intraoral scanning system;
FIGS. 2A and 2B illustrate different examples of an intersection criterium;
FIG. 3 illustrates another example on how to assign texture values to a vertex;
FIG. 4 illustrates an example of a 3D model being rendered according to a virtual camera viewing direction;
FIG. 5 illustrates an example of the one or more processing units,
FIGS. 6A, 6B and 6C illustrate different examples of the one or more processing units;
FIG. 7 illustrates an example of the one or more processing units, and
FIG. 8 illustrates an example of interpolating a texture value.

### DETAILED DESCRIPTION

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the devices, systems, mediums, programs and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include microprocessors, microcontrollers, digital signal processors (DSPs), field programmable gate arrays (FPGAs), programmable logic devices (PLDs), gated logic, discrete hardware circuits, and other suitable hardware configured to perform the various functionality described throughout this disclosure. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

A scanning for providing intra-oral scan data may be performed by a dental scanning system that may include an intraoral scanning device, such as the TRIOS series scanners from 3Shape A/S. The dental scanning system may include a wireless capability as provided by a wireless network unit. The scanning device may employ a scanning principle such as triangulation-based scanning, confocal scanning, focus scanning, ultrasound scanning, x-ray scanning, stereo vision, structure from motion, optical coherent tomography OCT, or any other scanning principle. In an embodiment, the scanning device is capable of obtaining surface information by operated by projecting a pattern and translating a focus plane along an optical axis of the scanning device and capturing a plurality of 2D images at different focus plane positions such that each series of captured 2D images corresponding to each focus plane forms a stack of 2D images. The acquired 2D images are also referred to herein as raw 2D images, wherein raw in this context means that the images have not been subject to image processing. The focus plane position is preferably shifted along the optical axis of the scanning system, such that 2D images captured at several focus plane positions along the optical axis form said stack of 2D images (also referred to herein as a sub-scan) for a given view of the object, i.e. for a given arrangement of the scanning system relative to the object. After moving the scanning device relative to the object or imaging the object at a different view, a new stack of 2D images for that view may be captured. The focus plane position may be varied by means of at least one focus element, e.g., a moving focus lens. The scanning device is generally moved and angled relative to the dentition during a scanning session, such that at least some sets of sub-scans overlap at least partially, to enable reconstruction of the digital dental 3D model by stitching overlapping 3D subscans together in real-time and display the progress of the virtual 3D model on a display as feedback to the user. The result of stitching is the digital 3D representation of a surface larger than that which can be captured by a single sub-scan, i.e. which is larger than the field of view of the 3D scanning device. Stitching, also known as registration and fusion, works by identifying overlapping regions of 3D surface in various sub-scans and transforming sub-scans to a common coordinate system such that the overlapping regions match, finally yielding the digital 3D model. An Iterative Closest Point (ICP) algorithm may be used for this purpose. Another example of a scanning device is a triangulation scanner, where a time varying pattern is projected onto the dental object and a sequence of images of the different pattern configurations are acquired by one or more cameras located at an angle relative to the projector unit.

The dental scanning system may be an intraoral scanning system. The scanning device may be an intraoral scanning device.

Color texture of the dental object may be acquired by illuminating the object using different monochromatic colors such as individual red, green and blue colors or my illuminating the object using multichromatic light such as white light. A 2D image may be acquired during a flash of white light.

Generally, the process of obtaining surface information in real time of a dental object to be scanned requires the scanning device to illuminate the surface and acquire high number of 2D images. Typically, a high-speed camera is used with a framerate of 300-2000 2D frames pr second dependent on the technology and 2D image resolution. The high amount of image data needed to be handled by the scanning device to eighter directly forward the raw image data stream to an external processing device or performing some image processing before transmitting the data to an external device or display. This process requires that multiple electronic components inside the scanner is operating with a high workload thus requiring a high demand of current.

The scanning device comprises one or more light projectors configured to generate an illumination pattern to be projected on a three-dimensional dental object during a scanning session. The light projector(s) preferably comprises a light source, a mask signal having a spatial pattern, and one or more lenses such as collimation lenses or projection lenses. The light source may be configured to generate light of a single wavelength or a combination of wavelengths (mono- or polychromatic). The combination of wavelengths may be produced by using a light source configured to produce light (such as white light) comprising different wavelengths. Alternatively, the light projector(s) may comprise multiple light sources such as LEDs individually producing light of different wavelengths (such as red, green, and blue) that may be combined to form light comprising the different wavelengths. Thus, the light produced by the light source may be defined by a wavelength defining a specific color, or a range of different wavelengths defining a combination of colors such as white light. In an embodiment, the scanning device comprises a light source configured for exciting fluorescent material of the teeth to obtain fluorescence data from the dental object. Such a light source may be configured to produce a narrow range of wavelengths. In another embodiment, the light from the light source is infrared (IR) light, which is capable of penetrating dental tissue. The light projector(s) may be DLP projectors using a micro mirror array for generating a time varying pattern, or a diffractive optical element (DOF), or back-lit mask signal projectors, wherein the light source is placed behind a mask signal having a spatial pattern, whereby the light projected on the surface of the dental object is patterned. The back-lit mask signal projector may comprise a collimation lens for collimating the light from the light source, said collimation lens being placed between the light source and the mask signal. The mask signal may have a checkerboard pattern, such that the generated illumination pattern is a checkerboard pattern. Alternatively, the mask signal may feature other patterns such as lines or dots, etc.

The scanning device preferably further comprises optical components for directing the light from the light source to the surface of the dental object. The specific arrangement of the optical components depends on whether the scanning device is a focus scanning apparatus, a scanning device using triangulation, or any other type of scanning device. A focus scanning apparatus is further described in EP 2 442 720 B1 by the same applicant, which is incorporated herein in its entirety.

The light reflected from the dental object in response to the illumination of the dental object is directed, using optical components of the scanning device, towards the image sensor(s). The image sensor(s) are configured to generate a plurality of images based on the incoming light received from the illuminated dental object. The image sensor unit may be a high-speed image sensor such as an image sensor configured for acquiring images with exposures of less than 1/1000 second or frame rates in excess of 250 frames pr. second (fps). As an example, the image sensor may be a rolling shutter (CCD) or global shutter sensor (CMOS). The image sensor(s) may be a monochrome sensor including a color filter array such as a Bayer filter and/or additional filters that may be configured to substantially remove one or more color components from the reflected light and retain only the other non-removed components prior to conversion of the reflected light into an electrical signal. For example, such additional filters may be used to remove a certain part of a white light spectrum, such as a blue component, and retain only red and green components from a signal generated in response to exciting fluorescent material of the teeth.

The network unit may be configured to connect the dental scanning system to a network comprising a plurality of network elements including at least one network element configured to receive the processed data. The network unit may include a wireless network unit or a wired network unit. The wireless network unit is configured to wirelessly connect the dental scanning system to the network comprising the plurality of network elements including the at least one network element configured to receive the processed data. The wired network unit is configured to establish a wired connection between the dental scanning system and the network comprising the plurality of network elements including the at least one network element configured to receive the processed data.

The dental scanning system preferably further comprises a processor configured to generate scan data (such as extra-oral scan data and/or intra-oral scan data) by processing the two-dimensional (2D) images acquired by the scanning device. The processor may be part of the scanning device. As an example, the processor may comprise a Field-programmable gate array (FPGA) and/or an Advanced RISC Machines (ARM) processor located on the scanning device. The scan data comprises information relating to the three-dimensional dental object. The scan data may comprise any of: 2D images, 3D point clouds, depth data, texture data, intensity data, color data, and/or combinations thereof. As an example, the scan data may comprise one or more point clouds, wherein each point cloud comprises a set of 3D points describing the three-dimensional dental object. As another example, the scan data may comprise images, each image comprising image data e.g. described by image coordinates and a timestamp (x, y, t), wherein depth information can be inferred from the timestamp. The image sensor(s) of the scanning device may acquire a plurality of raw 2D images of the dental object in response to illuminating said object using the one or more light projectors. The plurality of raw 2D images may also be referred to herein as a stack of 2D images. The 2D images may subsequently be provided as input to the processor, which processes the 2D images to generate scan data. The processing of the 2D images may comprise the step of determining which part of each of the 2D images are in focus in order to deduce/generate depth information from the images. The internal depth information may be used to generate 3D point clouds comprising a set of 3D points in space, e.g., described by cartesian coordinates (x, y, z). The 3D point clouds may be generated by the processor or by another processing unit. Each 2D/3D point may furthermore comprise a timestamp that indicates when the 2D/3D point was recorded, i.e., from which image in the stack of 2D images the point originates. The timestamp is correlated with the z-coordinate of the 3D points, i.e., the z-coordinate may be inferred from the timestamp. Accordingly, the output of the processor is the scan data, and the scan data may comprise image data and/or depth data, e.g. described by image coordinates and a timestamp (x, y, t) or alternatively described as (x, y, z). The scanning device may be configured to transmit other types of data in addition to the scan data. Examples of data include 3D information, texture information such as infra-red (IR) images, fluorescence images, reflectance color images, x-ray images, and/or combinations thereof.

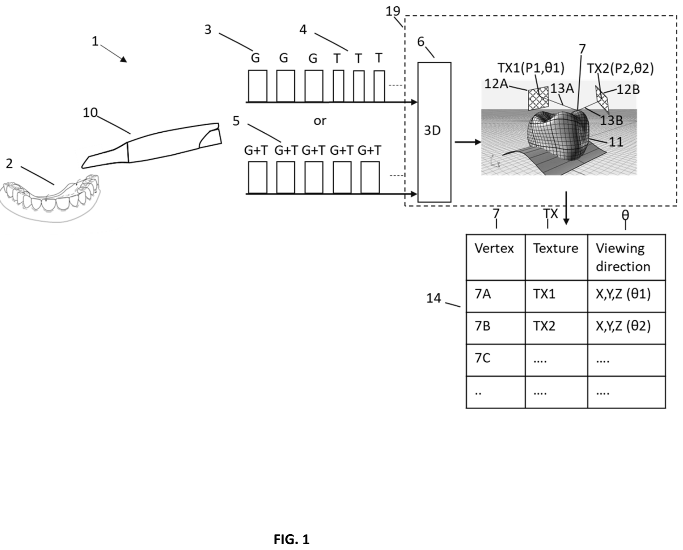

FIG. 1 illustrates an intraoral scanning system 1 that includes an intraoral scanner 10 configured to acquire geometric image data (3, G) and a plurality of texture image data (4, T) of a dental object 2. In this example, the dental object 2 is seen as a complete jaw, but it could also have been a single tooth, teeth, or both an upper or a lower jaw. In this example, the geometrical image data (3, G) and the plurality of texture image data (4, T) are acquired separately, i.e at different timestamps. In another example, the geometric image data (5, G) and the plurality of texture image data (5, T) can be acquired at the same time. The system 1 includes one or more processing units 19 configured to generate a 3D model 11 of the dental object 2 based on the geometric image data (3, 5, G), wherein the 3D model 11 includes a 3D mesh with a plurality of vertices. The one or more processing units 19 is further configured to project a plurality of texture rays (13A, 13B) from at least one pixel and in a viewing direction (θ1, θ2) for each of the plurality of texture image data (12A, 12B), and wherein the at least one pixel (P1, P2) corresponds to a texture value (TX1, TX2). The one or more processing units 19 is configured to determine whether a vertex 7 of the plurality of vertices fulfils an intersection criterium relative to each of the plurality of texture rays (13A, 13B), and assign to the vertex 7, if the vertex fulfils the intersection criterium in relation to two or more texture rays (13A, 13B) of the plurality of texture rays, two or more texture values (TX1, TX2) and corresponding viewing directions (θ1, θ2) of the two or more texture rays (13A, 13B). In this example, the vertex 7 has been assigned with two texture values (TX1, TX2) and corresponding viewing directions (θ1, θ2).

Furthermore, the system 1 includes a storing unit 14 that is configured to receive and store the plurality of vertices 7 and the assigned texture values TX and corresponding viewing directions θ.

As illustrated in FIG. 1, the corresponding viewing directions (θ1, θ2) of the two or more texture rays (13A, 13B) are different.

The geometric image data (3, 5, G) and the plurality of texture image data (4, 5, T) are acquired from a same position relative to the dental object 2.

In the example where the geometric image data (3, G) and the plurality of texture image data (4, T) are acquired separately, each of the acquired plurality of texture image data has a first timestamp and the geometric image data has a second timestamp, and wherein the one or more processing units 19 is configured to correlate the plurality of texture image data relative to the geometric image data by comparing the first timestamp and the second timestamp. Furthermore, the geometric image data (3, G) is generated based on green, blue or red light emitted by the intraoral scanner, and the plurality of texture image data is generated based on a combination of green, blue and red light emitted separately by the intraoral scanner 10. In the other example, wherein the geometric image data (5, G) and the plurality of texture image data (5, T) are acquired at the same time, the first and second timestamps are the same. In this example, the intraoral scanner 10 is configured to emit white light that is being reflected by the dental object 2 and filtered, before being acquired by an image sensor, by a Bayer filter, and the geometric image data (5, G) and the plurality of texture image data (5, T) are generated based on the filtered white light, wherein one or more color channels of the Bayer filter is used for generating geometric image data (5, G) and all of the color channels of the Bayer filter are used for generating the plurality of texture image data (5, T).

The plurality of texture image data (4, 5, T) includes one or more of following wavelengths visible wavelengths between 380 nm and 750 nm, ultraviolet wavelengths between 100 nm and 380 nm, and infrared wavelengths between 750 nm and 1350 nm.

The plurality of texture image data (4, 5, T) includes a composition of the wavelengths.

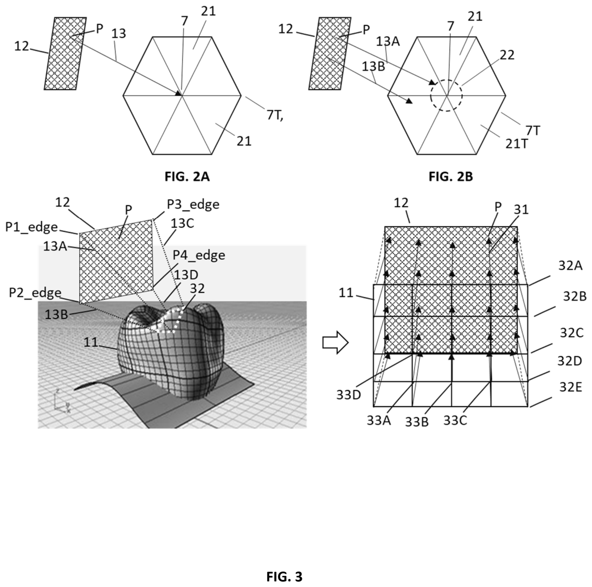

FIGS. 2A and 2B illustrate different examples of the intersection criterium between a vertex 7 and a texture ray 13. In both figures a plurality of vertices 7T are forming a plurality of facets 21T, wherein in this specific example a group of three vertices is forming a facet 21. A texture ray 12 is projected from a pixel P of a texture image data 12 towards a vertex 7. In FIG. 2A, the intersection criterium includes the vertex that is intersected by the texture ray 13 would be assigned with the texture value TX of the corresponding texture ray 13. In FIG. 2B, the intersection criterium includes that the vertex which is closest 22 to an intersection of a texture ray 13A would be assigned with a corresponding texture value TX.

FIG. 3 illustrates another example on how to assign texture values TX to a vertex 7, and more specifically, an edge vertex 32 and a framed vertex 33. In FIG. 3, each of the plurality of texture image data 12 includes a group of edge pixels (P1_edge, P2_edge, P3_edge, P4_edge) that at least partly surrounds a group of framed pixels P of each of the plurality of texture image data 12. The one or more processing units 19 is configured to, for each of the plurality of texture image data 12 determine multiple edge texture rays (13A, 13B, 13C, 13D) in a viewing direction θ of the group of edge pixels (P1_edge, P2_edge, P3_edge, P4_edge). The one or more processing units is configured to determine whether a group of edge vertices (32A, 32B, 32C, 32D, 32E) of the plurality of vertices 7T fulfil the intersection criterium relative to the multiple edge texture rays (13A, 13B, 13C, 13D), wherein the group of edge vertices (32A, 32B, 32C, 32D, 32E) at least partly surrounds a group of framed vertices (33, 33A, 33B, 33C, 33D) of the plurality of vertices 7T. The one or more processing units is configured to determine a framed vertex ray 31 in a viewing direction θ of each framed vertices (33, 33A, 33B, 33C, 33D) of the group of framed vertices 33 towards the group of framed pixels P. The one or more processing units 19 is configured to determine whether a framed vertex (33, 33A, 33B, 33C, 33D) of the framed vertices (33, 33A, 33B, 33C, 33D) fulfils a second intersection criterium between the framed vertex ray 31 of the framed vertex 33 and a framed pixel P of the group of framed pixels P, and assign to the framed vertex 33, if the vertex 33 fulfils the second intersection criterium, a texture value TX of the framed pixel P and the viewing direction θ of the framed vertex ray 31.

The second intersection criterium includes one or more of following a framed vertex ray 33 intersects a framed pixel P, and a framed vertex ray 31 intersects closest to a framed pixel P. The intersection criterium for texture rays is similar to the second intersection criterium for the framed vertex rays.

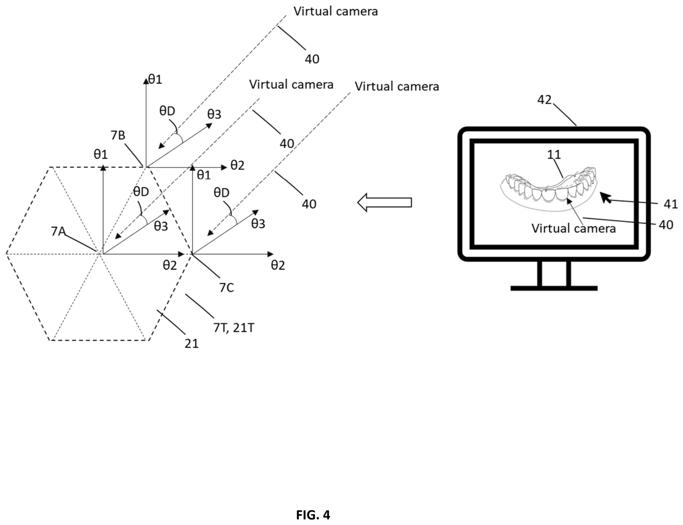

FIG. 4 illustrates an example of the 3D model 11 being rendered according to a viewing direction 40 of a virtual camera. In this example, each of the plurality of vertices (7A, 7B, 7C) comprises at least three texture values TX with corresponding viewing directions (θ1, θ2, θ3). The one or more processing units 19 is configured to render the 3D model 11 according to a virtual camera viewing direction 40 of a virtual camera, wherein the 3D model 11 includes a plurality of facets 21 formed by the plurality of vertices (7T, 7A, 7B, 7C) such that a facet 21 of the plurality of facets 21T includes at least three vertices (7A, 7B, 7C) of the plurality of vertices 7T, and select a texture value of the two or more texture values for each of the at least three vertices (7A, 7B, 7C), wherein a corresponding viewing direction (θ1, θ2, θ3) of the selected texture value TX for each of the at least three vertices (7A, 7B, 7C) fulfil a deviation angle criterium θD in relation to the virtual camera viewing direction 40. The deviation angle criterium θD may be that the angle difference between the viewing direction (θ1, θ2, θ3) of a corresponding texture value TX and the virtual camera viewing direction 40 has to be below 90 degrees or below 180 degrees. The one or more processing units 19 is further configured to determine a color for the facet 21 based on the selected texture value for each of the at least three vertices. When the 3D model 11 is rotated based on a user input 41 the color of each of the plurality of facets 21T of the 3D model changes according to the virtual camera viewing direction 40. The one or more processing units 19 is configured to determine an orientation of the 3D model 11 based on the virtual camera viewing direction 40, and wherein the virtual camera viewing direction 40 is determined based on a user input 41. The deviation angle criterium θD includes one or more of following a viewing direction of a texture value is closest to a virtual camera viewing direction, and a viewing direction of a texture value is below a maximum viewing direction angle in relation to a virtual camera viewing direction.

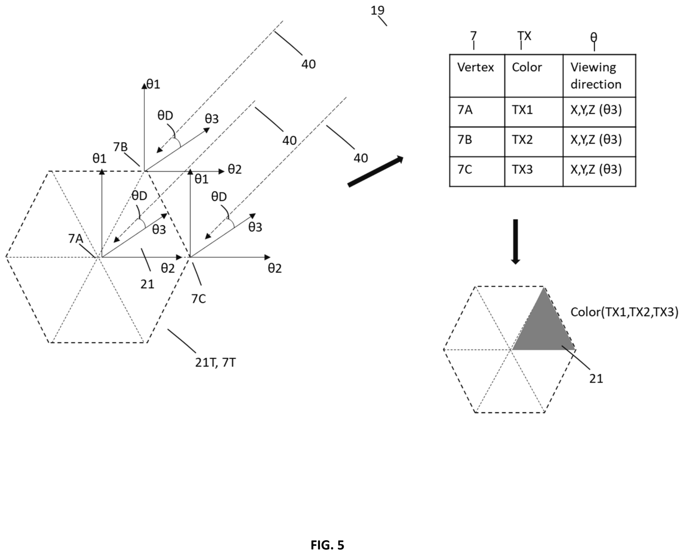

FIG. 5 illustrates an example of the one or more processing units 19 that is configured to render the 3D model 11 according to a virtual camera viewing direction 40 of a virtual camera, wherein the 3D model 11 includes a plurality of facets 21T formed by the plurality of vertices 7T such that a facet 21 of the plurality of facets 21T includes at least three vertices (7A,7B,7C) of the plurality of vertices 7T. The one or more processing units 19 is configured to select a texture value (TX1, TX2, TX3) of the two or more texture values TX for each of the at least three vertices (76A, 7B, 7C), wherein a corresponding viewing direction (θ3, θ3, θ3) of the selected texture value (TX1, TX2, TX3) for each of the at least three vertices (7A, 7B, 7C) fulfil a deviation angle criterium θ3 in relation to the virtual camera viewing direction θD. The one or more processing units 19 is configured to determine a color for the facet 21 based on the selected texture value (TX1, TX2, TX3) for each of the at least three vertices (7A, 7B, 7C).

In one example the one or more processing units 19 is configured to determine the color based on an average of the selected texture values (TX1, TX2, TX3).

In yet another example, the one or more processing units 19 is configured to determine the color of the facet 21 based on a weighted average of the selected texture values (TX1, TX2, TX3), and wherein each of the selected texture values (TX1, TX2, TX3) has a weighting coefficient that is determined based on a difference between a virtual camera viewing direction 40 of a virtual camera and the viewing direction (θ3, θ3, θ3) of each of the selected texture values (TX1, TX2, TX3).

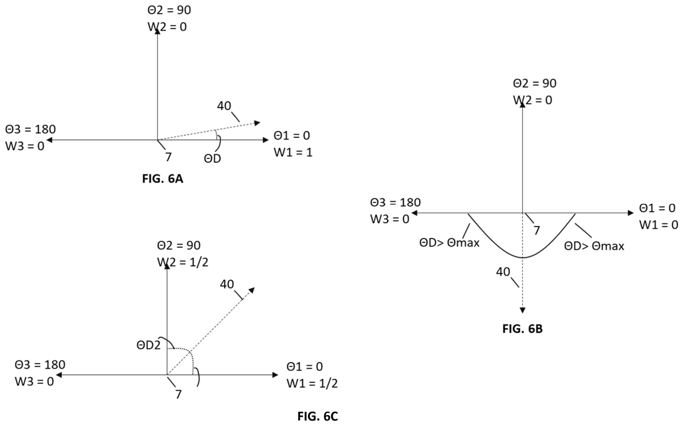

FIGS. 6A, 6B, and 6C illustrates different examples of the one or more processing units 19 determining weighting coefficients (W1, W2, W3) for the texture values TX(θ1), TX(θ2), TX(θ3) of a vertex 7 in relation to a virtual camera viewing direction 40. The one or more processing units 19 is configured to assign a weighting coefficient (W1, W2, W3) to each of the two or more texture values (TX1, TX2, TX3) assigned to the vertex 7, and determine the weighting coefficient (W1, W2, W3) of each of the two or more texture values (TX1, TX2, TX3) based on a difference θD between a virtual camera viewing direction 40 of a virtual camera and the corresponding viewing direction (θ1, θ2, 03) of each of the two or more texture values (TX1, TX2, TX3).

The weighting coefficient (W1, W2, W3) is above zero when the difference θD between the virtual camera viewing direction and the corresponding viewing direction of each of the two or more texture values is below or equal to a maximum deviation angle θmax, and wherein the weighting coefficient (W1, W2, W3) is zero when the difference θD between the virtual camera viewing direction 40 and the corresponding viewing direction (θ1, θ2, θ3) of each of the two or more texture values (TX1, TX2, TX3) is above the maximum deviation angle θmax.

The difference between the virtual camera viewing direction 40 and the viewing direction (θ1, θ2, θ3) of a texture value TX is determined by based on one or more of following an angle between the virtual camera viewing direction 40 and the viewing direction (θ1, θ2, θ3) of a texture value TX, and a cosine of an angle θD between the virtual camera viewing direction 40 and the viewing direction of a texture value TX.

FIG. 6A illustrates an example where the virtual camera viewing direction 40 is closest to a first viewing direction θ1 of a corresponding first texture value TX1, and the deviation criterium is fulfilled. In this example the weighting coefficient W1 of the first texture value TX1 is set to 1 and the remaining weighting coefficients (W2, W3) are set to zero or a very small value reflecting the relevance of the texture values. In FIG. 6B, none of the viewing directions (θ1, θ2, θ3) fulfils the deviation angle criterium, which in this example, means that the angle difference between the respectively viewing directions (θ1, θ2, θ3) and the virtual camera viewing directions 40 are above the maximum deviation angle θmax. In FIG. 6C, the virtual camera viewing direction 40 is between the first θ1 and second θ2 viewing directions of the respective texture values (TX1, TX2), and the respectively the first and second weighting coefficients (W1, W2) are the same. The third weighting coefficient W3 is set to zero as the angle difference θD between the third viewing direction θ3 and the virtual camera viewing direction 40 does not fulfil the deviation angle criterium.

The deviation angle criterium includes the maximum deviation angle which is between 45 and 180 degrees or 90 degrees and 180 degrees.

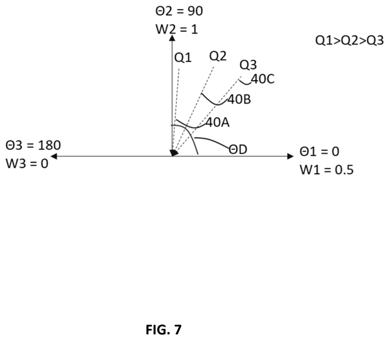

FIG. 7 illustrates an example of the one or more processing units that is configured to determine a quality score of the color determined for a facet 21, and wherein the quality score is determined based on a difference θD between the virtual camera viewing direction 40 and the viewing direction θ1 for each of the selected texture values (TX1, TX2, TX3), and wherein the quality score decreases when the difference increases. In the present example, the three different virtual camera viewing directions (40A, 40B, 40C) are seen, and wherein each of the virtual camera viewing directions (40A, 40B, 40C) corresponds to different rendering of the 3D model 11. In all three examples, the second texture value TX2 with corresponding second viewing direction θ2 is selected, and the second weighting coefficient W2 is set to one or a value that is close to one, e.g. 0.95. The first weighting coefficient W1 is set to a very low value, e.g. 0.05, and the third weighting coefficient W3 is set to zero. In another example, the second weighting coefficient W2 would vary according to the angle difference θD between the virtual camera viewing direction 40 and the second viewing direction θ2. In three different examples, the quality score (Q1, Q2, Q3) changes as the angle difference θD changes. In this example, the first quality score Q1 is higher than the second and third quality scores (Q2, Q3) as the angle difference θD is smallest between the second viewing direction θ2 and the first virtual camera viewing direction 40.

The one or more processing units 19 is configured to assign a feedback color to the facet 21 if the quality score (Q1, Q2, Q3) is below a quality threshold, and assign the color to the facet 21 if the quality score (Q1, Q2, Q3) is at or above the quality threshold.

The one or more processing units 19 is configured to adjust a transparency value of the feedback color based on the quality score.

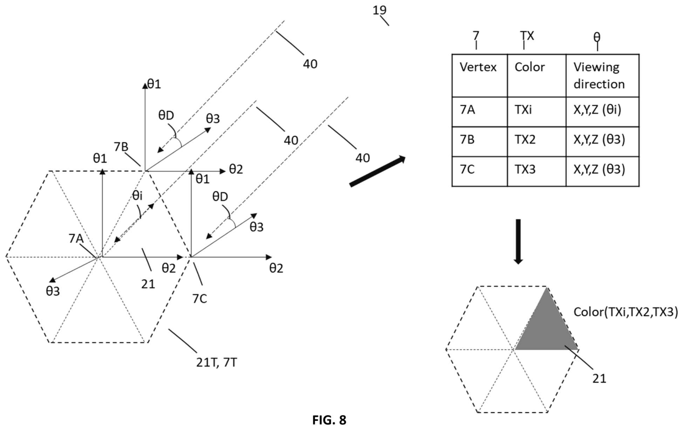

FIG. 8 illustrates an example wherein one or more of the at least three vertices (7A, 7B, 7C) of the facet 21 do not include a texture value TX with a corresponding viewing direction θ3 that fulfils the deviation angle criterium in relation to the virtual camera viewing direction 40. In this example a first vertex 7A does not include a texture value TX that has a viewing direction θ3 that fulfils the deviation angle criterium relative to the virtual camera viewing direction 40.

The one or more processing units 19 is configured to interpolate a texture value TXi for the one or more of the at least three vertices 7A based on one or more of the at least three vertices (7B, 7C) that does include a texture value (TX2, TX3) with a corresponding viewing direction (θ2, θ3) that fulfils the deviation angle criterium in relation to the virtual camera viewing direction 40. In this example, the one or more processing units 19 is configured to interpolate a texture value TXi that has a viewing direction θi that fulfills the deviation angle criterium. The one or more processing units 19 is configured to interpolate the texture value TXi such that the corresponding viewing direction θi fulfils the deviation angle criterium. The interpolated texture value TXi is determined based on the selected texture values (TX2, TX3) that correspond to a third viewing direction θ3 that fulfils the deviation angle criterium.

The one or more processing units 19 is configured to determine a quality score of the color determined for the facet 21, and wherein the quality score is determined based on a number of the one or more of the at least three vertices of the facet 21 that does not include a texture value TX with a corresponding viewing direction θ that fulfils the deviation angle criterium in relation to the virtual camera viewing direction 40, and wherein the quality score for a color assigned to a facet decreases when more interpolations are needed to determine missing texture values TXi for the corresponding facet 21.

Many modifications and other embodiments of the inventions set forth herein will come to mind of one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

### ITEMS

1A. An intraoral scanning system configured to dynamically adjust a plurality of colors of a 3D model based on a virtual camera viewing direction, wherein the intraoral scanning system comprising:
   - an intraoral scanner configured to:
      o acquire geometric image data of a dental object and a plurality of texture image data of the dental object at different viewing directions relative to a position on the dental object,
   - one or more processing units configured to:
      o generate a 3D model of the dental object based on the geometric image data,
      o determine, based on the plurality of texture image data, a plurality of texture values from the different viewing directions,
      o determine, according to the virtual camera viewing direction, a plurality of colors for the 3D model based on the plurality of texture values, wherein viewing directions of the plurality of texture values fulfils a deviation angle criterium relative to the virtual camera viewing direction.
1. An intraoral scanning system configured to assign a texture value to a three-dimensional (3D) model of a dental object, wherein the intraoral scanning system comprising:
   - an intraoral scanner configured to:
      o acquire geometric image data of a dental object and a plurality of texture image data of the dental object at different viewing directions relative to a position on the dental object,
   - one or more processing units configured to:
      o generate a 3D model of the dental object based on the geometric image data, wherein the 3D model includes a 3D mesh with a plurality of vertices,
      o project a plurality of texture rays from at least one pixel and in a viewing direction for each of the plurality of texture image data, and wherein the at least one pixel corresponds to a texture value,
      o determine whether a vertex of the plurality of vertices fulfils an intersection criterium relative to each of the plurality of texture rays, and
      o assign to the vertex, if the vertex fulfils the intersection criterium in relation to two or more texture rays of the plurality of texture rays, two or more texture values and corresponding viewing directions of the two or more texture rays.
2. The intraoral scanning system according to item 1, wherein the corresponding viewing directions of the two or more texture rays are different.
3. The intraoral scanning system according to item 1, wherein the geometric image data and the plurality of texture image data are acquired from a same position relative to the dental object.
4. The intraoral scanning system according to any of the previous items, wherein each of the acquired plurality of texture image data has a first timestamp and the geometric image data has a second timestamp, and wherein the one or more processing units is configured to correlate the plurality of texture image data relative to the geometric image data by comparing the first timestamp and the second timestamp.
5. The intraoral scanning system according to any of the previous items, wherein, each of the plurality of texture image data includes a group of edge pixels that at least partly surrounds a group of framed pixels of each of the plurality of texture image data, and the one or more processing units is configured to, for each of the plurality of texture image data:
   - determine multiple edge texture rays in a viewing direction of the group of edge pixels, wherein the multiple edge texture rays are part of the plurality of texture rays,
   - determine whether a group of edge vertices of the plurality of vertices fulfil the intersection criterium relative to the multiple edge texture rays, wherein the group of edge vertices at least partly surrounds a group of framed vertices of the plurality of vertices,
   - determine a framed vertex ray in a viewing direction of each framed vertices of the group of framed vertices towards the group of framed pixels,
   - determine whether a framed vertex of the framed vertices fulfils a second intersection criterium between the framed vertex ray of the framed vertex and a framed pixel of the group of framed pixels, and
   - assign to the framed vertex, if the vertex fulfils the second intersection criterium, a texture value of the framed pixel and the viewing direction of the framed vertex ray.
6. The intraoral scanning system according to any of the previous items, wherein the one or more processing units is configured to:
   - render the 3D model according to a virtual camera viewing direction of a virtual camera, wherein the 3D model includes a plurality of facets formed by the plurality of vertices such that a facet of the plurality of facets includes at least three vertices of the plurality of vertices,
   - select a texture value of the two or more texture values for each of the at least three vertices, wherein a corresponding viewing direction of the selected texture value for each of the at least three vertices fulfil a deviation angle criterium in relation to the virtual camera viewing direction, and
   - determine a color for the facet based on the selected texture value for each of the at least three vertices.
7. The intraoral scanning system according to item 6, wherein the one or more processing units is configured to determine an orientation of the 3D model based on the virtual camera viewing direction, and wherein the virtual camera viewing direction is determined based on a user input.
8. The intraoral scanning system according to any of the previous items, wherein the one or more processing units is configured to:
   - assign a weighting coefficient to each of the two or more texture values assigned to the vertex, and
   - determine the weighting coefficient of each of the two or more texture values based on a difference between a virtual camera viewing direction of a virtual camera and the corresponding viewing direction of each of the two or more texture values.
9. The intraoral scanning system according to item 8, wherein the weighting coefficient is above zero when the difference between the virtual camera viewing direction and the corresponding viewing direction of each of the two or more texture values is below or equal to a maximum deviation angle, and wherein the weighting coefficient is zero when the difference between the virtual camera viewing direction and the corresponding viewing direction of each of the two or more texture values is above the maximum deviation angle.
10. The intraoral scanning according to item 6, wherein the one or more processing units is configured to determine the color based on an average of the selected texture values.
11. The intraoral scanning according to item 6, wherein the one or more processing units is configured to determine the color based on a weighted average of the selected texture values, and wherein each of the selected texture values has a weighting coefficient that is determined based on a difference between a virtual camera viewing direction of a virtual camera and the viewing direction of each of the selected texture values.
12. The intraoral scanning system according to any of items 8 to 11, wherein the difference between the virtual camera viewing direction and the viewing direction of a texture value is determined by based on one or more of following:
   - an angle between the virtual camera viewing direction and the viewing direction of a texture value, and
   - a cosine of an angle between the virtual camera viewing direction and the viewing direction of a texture value.
13. The intraoral scanning system according to item 6, wherein the one or more processing units is configured to determine a quality score of the color determined for the facet, and wherein the quality score is determined based on a difference between the virtual camera viewing direction and the viewing direction for each of the selected texture values, and wherein the quality score decreases when the difference increases.
14. The intraoral scanning system according to any of items 6 to 13, wherein one or more of the at least three vertices of the facet do not include a texture value with a corresponding viewing direction that fulfils the deviation angle criterium in relation to the virtual camera viewing direction, and the one or more processing units is configured to interpolate a texture value for the one or more of the at least three vertices based on one or more of the at least three vertices that does include a texture value with a corresponding viewing direction that fulfils the deviation angle criterium in relation to the virtual camera viewing direction.
15. The intraoral scanning system according to item 14, wherein the one or more processing units is configured to determine a quality score of the color determined for the facet, and wherein the quality score is determined based on a number of the one or more of the at least three vertices of the facet that does not include a texture value with a corresponding viewing direction that fulfils the deviation angle criterium in relation to the virtual camera viewing direction, and wherein the quality score decreases when the number increases.
16. The intraoral scanning system according to item 13 or 15, wherein the one or more processing units is configured to:
   - assign a feedback color to the facet if the quality score is below a quality threshold, and
   - assign the color to the facet if the quality score is at or above the quality threshold.
17. The intraoral scanning system according to item 13 or 15, wherein the one or more processing units is configured to adjust a transparency value of the feedback color based on the quality score.
18. The intraoral scanning system according to any of the previous items, wherein the plurality of texture image data includes one or more of following wavelengths:
   - visible wavelengths between 380 nm and 750 nm,
   - ultraviolet wavelengths between 100 nm and 380 nm, and
   - infrared wavelengths between 750 nm and 1350 nm.
19. The intraoral scanning system according to item 18, wherein the plurality of texture image data includes a composition of the wavelengths.
20. The intraoral scanning system according to any of the previous items, wherein the deviation angle criterium includes one or more of following:
   - a viewing direction of a texture value is closest to a virtual camera viewing direction, and
   - a viewing direction of a texture value is below a maximum viewing direction angle in relation to a virtual camera viewing direction.
21. The intraoral scanning system according to any of the previous items, wherein the intersection criterium includes one or more of following:
   - a vertex of the plurality of vertices which is intersected by texture ray, and
   - a vertex of the plurality of vertices which is closest to an intersection of the 3D mesh and a texture ray.
22. The intraoral scanning system according to item 5, wherein the second intersection criterium includes one or more of following:
   - a framed vertex ray intersects a framed pixel, and
   - a framed vertex ray intersects closest to a framed pixel.
23. A computer-implemented method for assigning a texture value to a three-dimensional (3D) model of a dental object, wherein the method comprising:
   o receiving geometric image data of a dental object and a plurality of texture image data of the dental object and corresponding viewing directions relative to the dental object,
   o generating a 3D model of the dental object based on the geometric image data, wherein the 3D model includes a 3D mesh with a plurality of vertices,
   o projecting a plurality of texture rays from at least one pixel and in a viewing direction for each of the plurality of texture image data, and wherein the at least one pixel corresponds to a texture value,
   o determining whether a vertex of the plurality of vertices fulfils an intersection criterium relative to each of the plurality of texture rays, and
   o assigning to the vertex, if the vertex fulfils the intersection criterium in relation to two or more texture rays of the plurality of texture rays, two or more texture values and corresponding viewing directions of the two or more texture rays.

## Claims

1. An intraoral scanning system configured to assign a texture value to a three-dimensional (3D) model of a dental object, wherein the intraoral scanning system comprising:
• an intraoral scanner configured to:
o acquire geometric image data of a dental object and a plurality of texture image data of the dental object at different viewing directions relative to a position on the dental object,
• one or more processing units configured to:
o generate a 3D model of the dental object based on the geometric image data, wherein the 3D model includes a 3D mesh with a plurality of vertices,
o project a plurality of texture rays from at least one pixel and in a viewing direction for each of the plurality of texture image data, and wherein the at least one pixel corresponds to a texture value,
o determine whether a vertex of the plurality of vertices fulfils an intersection criterium relative to each of the plurality of texture rays,
o assign to the vertex, if the vertex fulfils the intersection criterium in relation to two or more texture rays of the plurality of texture rays, two or more texture values and corresponding viewing directions of the two or more texture rays, and
o render the 3D model by applying for each of the vertex a texture value of the two or more texture values which corresponding viewing direction matches to a virtual camera viewing direction of a virtual camera.

2. The intraoral scanning system according to claim 1, wherein the corresponding viewing directions of the two or more texture rays are different.

3. The intraoral scanning system according to claim 1, wherein the geometric image data and the plurality of texture image data are acquired from a same position relative to the dental object.

4. The intraoral scanning system according to any of the previous claims, wherein each of the acquired plurality of texture image data has a first timestamp and the geometric image data has a second timestamp, and wherein the one or more processing units is configured to correlate the plurality of texture image data relative to the geometric image data by comparing the first timestamp and the second timestamp.

5. The intraoral scanning system according to any of the previous claims, wherein, each of the plurality of texture image data includes a group of edge pixels that at least partly surrounds a group of framed pixels of each of the plurality of texture image data, and the one or more processing units is configured to, for each of the plurality of texture image data:
• determine multiple edge texture rays in a viewing direction of the group of edge pixels, wherein the multiple edge texture rays are part of the plurality of texture rays,
• determine whether a group of edge vertices of the plurality of vertices fulfil the intersection criterium relative to the multiple edge texture rays, wherein the group of edge vertices at least partly surrounds a group of framed vertices of the plurality of vertices,
• determine a framed vertex ray in a viewing direction of each framed vertices of the group of framed vertices towards the group of framed pixels,
• determine whether a framed vertex of the framed vertices fulfils a second intersection criterium between the framed vertex ray of the framed vertex and a framed pixel of the group of framed pixels, and
• assign to the framed vertex, if the vertex fulfils the second intersection criterium, a texture value of the framed pixel and the viewing direction of the framed vertex ray.

6. The intraoral scanning system according to any of the previous claims, wherein the one or more processing units is configured to:
• render the 3D model according to the virtual camera viewing direction of the virtual camera, wherein the 3D model includes a plurality of facets formed by the plurality of vertices such that a facet of the plurality of facets includes at least three vertices of the plurality of vertices,
• select a texture value of the two or more texture values for each of the at least three vertices, wherein a corresponding viewing direction of the selected texture value for each of the at least three vertices fulfil a deviation angle criterium in relation to the virtual camera viewing direction, and
• determine a color for the facet based on the selected texture value for each of the at least three vertices.

7. The intraoral scanning system according to claim 6, wherein the one or more processing units is configured to determine an orientation of the 3D model based on the virtual camera viewing direction, and wherein the virtual camera viewing direction is determined based on a user input.

8. The intraoral scanning system according to any of the previous claims, wherein the one or more processing units is configured to:
• assign a weighting coefficient to each of the two or more texture values assigned to the vertex, and
• determine the weighting coefficient of each of the two or more texture values based on a difference between the virtual camera viewing direction of the virtual camera and the corresponding viewing direction of each of the two or more texture values.

9. The intraoral scanning system according to claim 8, wherein the weighting coefficient is above zero when the difference between the virtual camera viewing direction and the corresponding viewing direction of each of the two or more texture values is below or equal to a maximum deviation angle, and wherein the weighting coefficient is zero when the difference between the virtual camera viewing direction and the corresponding viewing direction of each of the two or more texture values is above the maximum deviation angle.

10. The intraoral scanning according to claim 6, wherein the one or more processing units is configured to determine the color based on an average of the selected texture values.
